# EUROPEAN PATENT APPLICATION

(11) **EP 3 761 243 A1**
(43) Date of publication of application: **06.01.2021**
(21) Application number: 19184205.3
(22) Date of filing: 03.07.2019
(51) Int. Cl.: G06Q 10/08, G01D 11/00

(54) **SENSOR AND METHOD FOR SUPPLY CHAIN MONITORING**

(71) Applicant: ABB Schweiz AG, 5400 Baden (CH)
(72) Inventor: HARJUNKOSKI, Iiro, 69469 Weinheim (DE); SCHULZ, Dirk, 67149 Meckenheim (DE)
(74) Representative: Maiwald Patent- und Rechtsanwaltsgesellschaft mbH

(57) **Abstract**

A sensor (4) for monitoring the quality of a pourable and/or pumpable product (1-3), comprising:
• measuring means (5) configured to physically interact with at least one physical property of the product (1-3) and to output a response (5a) that is dependent on this physical property, and/or on the history of this physical property; and
• transmitting means (6) configured to convey said response (5a) to an entity who is monitoring the quality of the product (1-3),
wherein the sensor (4) is pourable and/or pumpable together with the product (1-3) and
• has a specific weight sufficiently similar to the specific weight of the product (1-3) such that the sensor (4) is able to float within the product (1-3); and/or
• comprises means (8, 8a, 8b) for adjusting its specific weight.

A method (100) for monitoring the quality of a pourable and/or pumpable product by means of a plurality of sensors (4, 4').

## Description

### FIELD OF THE INVENTION

The present invention relates to supply chain monitoring of goods, particularly for dairy products, pharmaceuticals and other perishable goods.

### BACKGROUND OF THE INVENTION

There are many products, such as dairy products and pharmaceuticals, that are perishable and have to be constantly kept in a cold-chain. Even if the cold-chain is only broken for a short amount of time, this may cause the product to go bad. The later this is found out, the more difficult and expensive it is to track the batch genealogy, and the more of the product will have to be recalled.

For this reason, automated systems for managing perishables in a supply chain have been developed. US 2011/029 413 A1 and US 2018/165 771 A1 disclose two examples.

### OBJECTIVE OF THE INVENTION

It is a first objective of the invention to provide a sensor with which conditions that may impair the quality of a product may be more accurately measured. It is a second objective of the invention to permit, on the basis of measurements by such sensors, a more efficient and materials-saving isolation of batches that are affected by a quality problem.

These objectives are achieved by a sensor according to a first independent claim and by a method according to a second independent claim, respectively. Further advantageous embodiments are detailed in the respective dependent claims.

### DISCLOSURE OF THE INVENTION

In a first aspect, the invention provides a sensor for monitoring the quality of a pourable and/or pumpable product. This sensor comprises measuring means that are configured to physically interact with at least one physical property of the product and to output a response that is dependent on this physical property, and/or on the history of this physical property.

When speaking of a "product", unless otherwise specified, the term admits a finished product (for example, a milk-based cocoa drink) as well as a component that goes into such a finished product (for example, milk or cocoa beans). Many manufacturing processes are organized in a cascaded and/or incremental manner, so that, for example, one and the same substance is a product in one stage of the process and a component (educt) for the manufacture of the next product in a subsequent stage of the process. Therefore, where the distinction between products and components (educts) is not important, the term "product" is used for legibility.

For example, the measuring means may be configured to output a response that is dependent on the temperature, the concentration of a chemical substance or microorganism, a motion and/or acceleration, and/or on a history of one or more of these quantities. Here, "concentration of a chemical substance or microorganism" specifically comprises a determination whether a chemical substance (e.g., one that is not permitted in food) or a microorganism (e.g., a pathogenic bacterium) is present at least in an amount that is relevant for the quality of the product. A "history" may, for example, comprise a maximum value of the temperature, an acceleration or another adverse condition that the product has ever experienced. Specifically, in the example of food, an increase of the temperature beyond a certain point may cause bacteria to replicate to dangerous levels. Cooling the food down again will stop the replication, but will not destroy the bacteria that are already there.

The response may, for example, be in the form of an electrical signal (such as a change of electrical resistance or creation of a voltage signal), but this is not mandatory. The response may also be mechanical (e.g., a breaking of a vial or another predetermined breaking point inside the sensor, thermal expansion of a material in response to a rising temperature) or chemical (e.g., by a chemical reaction that is triggered by the presence of a certain substance).

The sensor also comprises transmitting means that are configured to convey the response to an entity who is monitoring the quality of the product. In the simplest case, the transmitting means are configured to change their optical appearance in when the response changes. For example, once an increase of the temperature above an allowed maximum has triggered a chemical reaction in the measuring means, an indicator in the transmitting means may change color from green to red. In another example, the transmitting means comprise a radio frequency transmitter and/or an RFID transponder. The radio frequency transmitter may use any suitable radio transmission standard or protocol, such as Bluetooth, Bluetooth Low Energy, WiFi, 4G, 5G,Narrowband-loT or LoRaWAN.

The sensor is pourable and/or pumpable together with the product. It has a specific weight that is sufficiently similar to the specific weight of the product such that the sensor is able to float within the product. It depends, inter alia, on the viscosity of the product by which amount the specific weight of the sensor may deviate from the specific weight of the product before the sensor starts to drop to the bottom of a vessel holding the product or starts to rise to the top of the product. If the product is a liquid, whether the sensor floats depends on the balance between buoyancy forces that the product exerts on the sensor on the one hand, and viscosity forces that impede the movement of the sensor relative to the product on the other hand. If the product is in the form of solid grains, buoyancy forces further depend on a ratio between the size of the grains and the size of the sensor, and impeding forces further depend on frictional forces between the grains. In an exemplary advantageous embodiment, the specific weight of the sensor may be between 0.8 times and 1.2 times the specific weight of the product.

Alternatively or in combination to being able to float in the product right from the start, the sensor may comprise means for adjusting its specific weight.

The inventors have found that by matching the specific weight of the sensor to the specific weight of the product in this manner, more accurate measurements may be obtained specifically from the inside of a batch of product. For example, the warmest temperature inside the product may be a trigger that causes the product to go bad if it increases above a certain threshold. A temperature measurement of a container that holds the product is merely an approximation of this critical temperature. A sensor that can move through the product may directly capture said maximum temperature. The matching of the specific weight reduces the tendency of such a sensor to drop to the bottom of a vessel holding the product or to rise to the top of the product. In fact, adjusting the weight of a sensor allows it, within certain limits, to be placed at a particular level or temperature zone in a container, depending on the specific weight of the product at a given temperature and pressure. Configuring a set of sensors along the spectrum of expected specific weights will optimize the measurement coverage, allowing fine-granular measurement of the container content in the significant areas (e.g. too hot or too cold regions that are to be avoided).

Also, a sensor that is pourable and/or pumpable together with the product closes gaps in the monitoring of the product. If sensors are installed on containers (such as tanks) that are used to store or transport the product, or on reactors or other vessels in which work is done on the product, there is no monitoring during the time when the product is moved from one container or vessel to the other. By contrast, a sensor that moves with the product keeps on monitoring. This is advantageous because the transitions of the product between different stages of transport or production are particularly prone to cause a perishing of the product.

For example, when dairy products are pumped from a road tanker to a tank in a production facility through a hose, this hose and the pipe to which the hose connects may not be refrigerated. The integrity of the cold-chain then depends on whether the product makes its way through the hose and the pipe to the refrigerated tank in the production facility in less time than it takes to warm up too much. If the product already had a temperature near the upper limit of the allowable range in the road tanker, and then something unforeseen comes on top, like a temporary stop of the pumping, the quantity of product in the hose may go bad and then contaminate the rest of the product in the tank in the production facility. In this manner, a large quantity of product may be lost, or even recalled later if the problem is not noticed in time. A sensor that moves with the product can detect this situation, and the ingress of the product in the hose that has gotten too warm may be inhibited.

If the road tanker is replaced with a pipeline, the advantage is even more pronounced. When temperature sensors are installed on a pipeline, they always measure the temperature at particular points that are spaced apart by certain intervals. If the pumping through the pipeline is temporarily stopped, a portion of the product may get stuck in the middle between two temperature sensors and heat up by an amount that is not detectable.

Pharmaceuticals are another example where this gap-less monitoring of the product is particularly advantageous. For example, the end-user dose of a vaccine may contain just a few milligrams of the actual vaccine and cost tens of euros. When raw vaccine is handled, a single beaker of this material may be worth tens of thousands of euros. Therefore, an event that causes the product to lose its fitness and/or certification for delivery to a patient should be detected as soon as possible, before a tiny quantity of "invalid" material may "invalidate" a much larger batch of material by coming into contact with it.

If the product in which the sensor will be used is known, then the sensor may be designed from the beginning to have the correct specific weight. But on the other hand, it is not required to build a new, different sensor for every new product with a different specific weight. Rather, the specific weight of the sensor may be adjustable, e.g., by making its size, its weight or both adjustable. Only the ratio of the weight to the size matters.

In a factory, a product may undergo changes that change its specific weight. For example, the product may be mixed with some other component to form a new product with a new specific weight. Even if the specific weight of the sensor is not adjustable, gap-less monitoring may be ensured by seamlessly handing over the monitoring to a new sensor. For example, when two components are mixed to form a product inside a vessel, they may be monitored by respective sensors on their way to the vessel as described above. When the components enter the vessel, the respective sensors may be filtered out (e.g., by sieves). In the vessel, new sensors with a specific weight that matches the mixture may be added, and the monitoring may immediately continue. As it will be described below in the context of the method, the data may be seamlessly aggregated, so that in the event of a batch of a component going bad somewhere in the process, materials and facilities affected by the problem can be effectively isolated.

The use of the sensor that moves with the product does not preclude the additional use of sensors that are fixed on pipes, containers or vessels that hold the product, or on equipment that processes the product. Rather, the data from the sensor that moves with the product may be used to cross-check the data from the fixed sensors, and vice versa. In this manner, any faults or mis-calibrations of sensors may be detected.

In an especially advantageous embodiment, the sensor further comprises an energy harvesting device that is configured to convert a motion and/or an acceleration of the sensor into electrical power. This electrical power may, for example, be used to power the measuring means and/or the transmitting means. In this manner, a need to incorporate a battery within the sensor may be obviated. Most batteries contain toxic materials that may make a batch of food or pharmaceutical unfit for human use in the event that a sensor should break apart. While the sensor may be designed sufficiently small to be able to travel with the product, formed well for having the right hydrodynamic properties, and also be robust to survive pumping, this cannot completely rule out the possibility that a sensor may break, particularly if the sensor is used over and over again. In any case, any sensor may be tracked from the point of insertion to its removal to determine at any time the amount of sensors remaining in the product.

Pourable and/or pumpable media are not limited to liquid media. Rather, such media may also come as a mass of solid grains. Examples are cereal, coal or shredded materials, such as shredded meat or animal meal. If the sensor is configured to be pourable and/or pumpable together with a product that has the form of solid grains, preferably, a size of the sensor is typically between 0.8 times and 1.2 times the average size of the grains of the product. In this manner, a tendency of the sensor to move to the bottom or to the top of a pile of the product upon shaking of the product is avoided.

In an especially advantageous embodiment, the sensor comprises a housing that is expandable and/or contractable in order to change the specific weight, and/or the size, of the sensor. In this manner, one and the same sensor may continue to travel with the product even if the product undergoes a processing step that changes its specific weight or consistency.

In a further specially advantageous embodiment, the sensor further comprises a ferromagnetic element that is configured to stick to a (permanent or electric) magnet with a greater force than the force corresponding to the weight of the sensor. In this manner, the sensor may be easily retrieved from the product even if it is not possible to filter it out with a sieve. For example, when milk is processed into yoghurt and fruits are added, these fruits may be larger than the sensor, so there is no sieve that traps the sensor while letting the fruits pass.

In a further specially advantageous embodiment, the sensor comprises timestamping means that are configured to associate a timestamp with the response obtained from the measuring means. In this manner, a correlation between the measured response and the time can be established independently of whether the transmitting means are able to forward this response to a database or other data processing right away. For example, if the transmitting means comprise a radio transmitter, then the transmission may have to wait because the radio channel is busy or a duty cycle limitation (e.g., 10 %, 1 % or even 0.1 % for certain bands in the 868 MHz spectrum allocated to short-range devices) has been hit. Also, replay attacks with old sensor data may be avoided. The timestamping means may use any suitable time-base, such as a built-in real-time clock, and/or time information acquired by radio broadcast (such as GPS or DCF-77) or via a network.

In a further specially advantageous embodiment, the sensor further comprises cryptographic means configured to apply a digital signature to the response, and/or to the timestamp, by means of a private cryptographic key. Alternatively, or in combination to this, the cryptographic means may be configured to encrypt the response, and/or the timestamp. Such encryption may be a symmetric encryption that uses a private key, but it may also be an asymmetric encryption to a public key of the recipient (e.g., a data processing unit) that can only be reversed by the private key of this recipient.

By means of the digital signature and/or the encryption, mimicking or altering of transmissions from sensors is made more difficult. For example, an attacker might try to bring a factory to a halt by drowning out the short-range messages from the sensors with a high-powered transmission of fake messages from outside the premises indicating that a lot of materials have gone bad. In addition, encryption ensures confidentiality of the sensor data. Even if the transmissions from the sensor are meant to be short-range, they may be picked up at surprisingly large distances outside the premises if there is a line of sight to the factory and a directional antenna is used.

In a further specially advantageous embodiment, the sensor comprises reset logic that is configured to reset the sensor to begin a new monitoring session after a previous monitoring session has been completed. In particular, this reset may include both the reset of the monitoring functionality and the time-base used to generate the timestamp. The reset logic is further configured to require proof of possession of the private cryptographic key before performing the reset. The time-base needs to be initialized at least once when first powering up the sensor. Additionally, it may be advantageous to re-initialize the time-base whenever the sensor has been completely out of power (e.g., due to a completely drained battery or a long time without energy supply from the energy harvester) and is being powered back on. In such situations, the sensor may have no way of knowing exactly for how long it has been out of power.

The benefit of a reset logic is that the sensor may be re-used for new monitoring sessions for as long as it is physically functional to do so (i.e., not mechanically damaged and with an intact power supply), so it does not go to waste unnecessarily. However, the reset logic may also be abused to deliberately suppress measurement data that indicate a potential compromise of the product. For example, a worker who has made a mistake that causes a batch of product to go bad may not want to bear the brunt of the consequences. He may be tempted to erase the measurement data indicating the mistake before the sensor makes its next periodic transmission to a distributed control system or other data processing system. If proof of possession of the private key is required, then only authorized personnel may erase the data.

In a further specially advantageous embodiment, the sensor further comprises means to receive, from at least one other sensor, information gathered during a monitoring session performed by said other sensor on the product or one or more of its educts, and a memory configured to store at least this information. In this manner, the handover from one sensor to the next sensor when the product moves to another stage of its production may be affected even without the aid of an external data processing system. For example, depending on the plant layout, such handover may occur in a place where no radio communication with an external data processing system is possible.

In a further specially advantageous embodiment, the sensor comprises a unique identifier, and the transmitting means are further configured to convey this unique identifier to the entity who is monitoring the quality of the product. This facilitates the association of captured measurement data (responses) to individual batches of the product. In particular, since the sensor can only be within one batch of the product at any time, the combination of the unique identifier of the sensor and a timestamp uniquely denotes this batch.

The invention also provides a system for monitoring a product. This system comprises a plurality of the sensors described above. The system further comprises an administration entity that is configured to collect responses transmitted by the sensors through their respective transmitting means.

The administration entity may take any suitable form. For example, it may be a passive entity that merely listens to radio transmissions of responses from the sensors and records the responses, so as to have a gap-less documentation of the state of the product. But the administration entity may also be an active one that instructs sensors, for example, to perform a handover from one sensor to the next. For example, during such a handover, the previous sensor may be instructed to reset itself so that it may be re-used, and the next sensor may be instructed to seamlessly continue the monitoring. The administration entity obviates the need for a direct communication between the sensors and also safeguards the acquired responses. Therefore, the loss of data in case of loss or destruction of a sensor is minimized.

The administration entity may be a physical system, but this is not required. For example, the administration entity may be realized in a serverless manner using cloud-based resources, such as AWS resources marketed by Amazon. Upon receipt of a response from a sensor, storage of the response in a managed database, or any other desired action, may be triggered by a so-called "lambda function" without having to worry about which physical computing resource performs these actions. Also, a public or private blockchain, such as the Ethereum blockchain, may be used as an administration entity. The Ethereum blockchain may be used to store arbitrary types of data in an immutable manner, and "smart contracts" running on this blockchain may perform any desired further action.

For example, when a large batch of milk is to be sold, the "smart contract" may be configured to take the payment from the buyer in escrow. If the milk is delivered all right through an unbroken cold-chain as measured by the sensors, the payment is released to the seller. But if the cold-chain has been broken, the milk is refused, and the payment is refunded to the buyer. "Smart contracts" like this may be set up on the Ethereum blockchain in an immutable manner.

The invention also provides a method for monitoring the quality of a pourable and/or pumpable product by means of a plurality of sensors.

In the course of this method, during the handling of a first batch of a first component of the product, a first response that is dependent on at least one physical property of the first batch of this first component is obtained from at least one first sensor within the first batch of the first component. This first response is stored in association with a first unique identifier of the first batch of the first component.

Likewise, during the handling of a second batch of a second component of the product, a second response that is dependent on at least one physical property of the second batch of the second component is obtained from a second sensor within the second batch of the second component. This second response is stored in association with a second unique identifier of the second batch of the second component.

Herein, the terms "first component" and "second component" do not necessarily imply that these components must have different chemical compositions. Rather, these terms also comprise a pooling of batches of the same or a very similar material from a variety of sources for the further processing in larger quantities.

Such a "hierarchical" collection of a material happens, for example, when milk is collected for further processing and distribution on an industrial scale. At each milking event, one cow gives a few liters of milk. On the farm, the milk from many such events is pooled in a refrigerated tank. The milk is regularly collected from several such tanks on one tour of a larger road tanker. At a factory for dairy products, the milk from several such road tankers may be collected in a larger refrigerated tank, so that there is always enough raw milk on hand for high-throughput production even in the case of an unforeseen event (such as a gridlock on the route leading to the factory).

According to the method, upon mixing the first batch of the first component with the second batch of the second component, a third unique identifier of the resulting batch of the product is stored in association with the first unique identifier of the first batch of the first component and the second unique identifier of the second batch of the second component.

That is, the different sensors that are used to monitor the different batches can be made to work together in a synergistic manner that permits to efficiently track down and contain quality problems with a minimum loss of good batches of components or of the product.

As described above, the use of sensors that move within the components or within the product permits to catch most quality problems at the time at which they physically occur (such as milk warming up too much in a hose due to a temporary stop in the pumping over to the tank at the factory). But the method is also effective to track down quality problems that become known later on.

To stay within the example of dairy products, a particular cow may suddenly exhibit symptoms of a disease that has a two-day incubation period. This means that at the time the symptoms appear, the cow had already been infected with the disease for two days, and the milk that the cow has given during these two days may be contaminated. If each batch of milk that the cow has given in this time frame has been labelled with its own unique identifier, the method ensures that this unique identifier will be stored in association with all further poolings into which these batches have gone. For example,
- every road tanker charge that has come into contact with contaminated milk,
- every factory tank or facility at the factory that has come into contact with contaminated milk, and
- every item of final consumer product that contains some amount of contaminated milk
may be identified. In this manner, a precisely targeted recall may be made, and only a minimum of good milk needs to go to waste as a result of this recall.

It is also possible to track down the root cause of a quality problem starting from the finished product, independently of whether this root cause is something that the sensors may detect. For example, there may be end customer complaints that yoghurt contains ugly clots and tastes foul. It may then be determined which road tanker, which farm, and even which individual cow may have contributed to the milk that has gone into the concrete batch of yoghurt to which the complaints pertain.

The yoghurt has been produced at an industrial scale, so the loss of this particular batch is inevitable. But it is important to find the root cause to avoid even more financial losses or even factory shutdowns. The pooling of milk from many sources (many farms, many cows) for the production of one big batch of yoghurt is very efficient normally, but results in a very large number of potential root causes for a problem discovered in the final yoghurt. It is time-consuming and expensive to check each of these potential root causes (i.e., each individual cow) one by one.

Fortunately, if the database in which said responses are stored in association with said unique identifiers spans multiple products produced by the same factory, or even multiple factories, the root cause for a problem may be easily narrowed down by means of a "dragnet investigation".

For example, it may be determined that in the large storage tank at the factory, the milk from ten different farms may have come into contact with the milk that has gone into the bad batch of yoghurt. But data from other factories may indicate that milk from eight out of these ten farms that was delivered on the same day has been processed into products that were not complained about. It is then very probable that the root cause for the experienced quality problem is in one of the two remaining farms. So the required effort for the search has been reduced by 80 % already.

Using further reports of problems from other factories, the search may be narrowed down further. For example, if a quality problem is reported for cheese by another factory, it may be determined that the intersection between the set of cows from which the milk for the bad yoghurt could have come and the set of cows from which the milk for the bad cheese could have come comprises only three individual cows. An order may then be issued to keep the milk from these three cows on the farm and store it in separate containers for the next few days. That already contains the hazard and prevents further bad milk from destroying the quality of a much larger amount of good milk, without having to shut down multiple farms as a whole. If on the next day, cow number 2 from the intersection set starts to exhibit disease symptoms, this cow number 2 is very probably the root cause for the quality problem. The stored milk from cows number 1 and 3 may then be put back into the production process, and only the milk from cow number 2 is lost.

Preferably, during the handling of the batch of the product, a third response that is dependent on at least one physical property of the batch of the product is obtained from at least one sensor within the batch of the product. This extends the online quality monitoring and documentation of this monitoring to the next stage of the production.

If the product is formed mainly by a pooling of two identical components, such as milk, then the sensors that are already contained in the two components may be used further to monitor the product. However, if the two components have different specific weights (such as milk and shredded fruits), then the specific weight of the product will be different both from the specific weight of the first component and from the specific weight of the second component. It is then advantageous to retrieve the respective sensors from the two components, and use a new sensor with a matched specific weight to monitor the product.

As discussed before, the responses of the sensors may be used to detect a quality problem (such as materials going bad due to a broken cold-chain) online, so that the problem may be isolated before a small amount of bad material spoils a much larger amount of good material by virtue of mixing with this good material.

Therefore, preferably, if the first response obtained from the first sensor fails to meet a first predefined quality criterion, and/or if not all first sensors are retrieved from the first batch of the first component in an intact state, the first batch of the first component is marked as bad, and the mixing of the first batch of the first component with the second batch of the second component is inhibited.

A failure to retrieve all first sensors from the first batch of the first component in an intact state may, for example, indicate that one of the sensors has broken apart and fragments of it are floating around in the first component. The first component is then not safe for human consumption because the electronic components of the sensor are not edible. It is also possible that some anomaly in the process, such as a clogged pipe, has trapped one or more sensors.

Likewise, if the second response obtained from the second sensor fails to meet a first predefined quality criterion, and/or if not all second sensors are retrieved from the first batch of the first component in an intact state, the second batch of the second component is marked as bad, and the mixing of the first batch of the first component with the second batch of the second component is inhibited.

As discussed before, whenever a batch of a component is found to be bad for whatever reason (be this reason determinable using the sensors or not), preferably, all further batches whose unique identifiers are stored in association with the unique identifier of the batch may be determined as bad. This prevents the quality problem from spreading further.

In a specially advantageous embodiment, the storing may be performed on a write-once, read-many memory. In this manner, the audit trail of the responses delivered by the sensors is protected against later alterations. For example, it is made harder to let measurement values that indicate a potential compromise of the product "disappear", or to obscure the fact that a particular bad component (such as rotten milk from a particular farm) may be the root cause for a quality problem in the final product (such as bad yoghurt). There is a high financial temptation for such manipulations because a successful manipulation may make the difference between having to pay money for discarding a bad commodity as junk and earning money from fraudulently selling this bad commodity.

The write-once, read-many memory may be a memory with an irreversible physical writing process (such as a CD-R or DVD-R on which the data is "burnt", or a PROM memory that can be written electrically once and only once), but it may also be, for example, a data base or a cloud service that specifically disallows later alterations or deletions of files by their rightful owners. For example, the Amazon S3 storage service has an option to lock stored objects in this manner. A blockchain, such as the public Ethereum blockchain that is mainly used to run the Ether cryptocurrency, may also be used as such an indelible storage.

Preferably, the method makes use of the sensors of the type described above. However, it is not limited to these sensors. Alternatively, or in combination, other sensors may be used, such as a sensor that is fixed on the inside of a packaging in which the product is delivered. In the example of dairy products discussed above in detail, such a sensor may be fixed inside a milk carton or yoghurt cup. For example, when the product is complained about as being rotten, the data gathered by such sensors may be used to prove that the cold-chain was not broken at any time while the product was still on sale in the shop. In this case, it may be determined that the customer's improper handling of the product is at fault, so no expensive product recall is necessary.

In a further particularly advantageous embodiment, a plurality of first sensors is deployed in the first batch of the first component, and these first sensors differ in specific weight and/or in size, and/or a plurality of second sensors is deployed in the second batch of the second component, and these second sensors differ in specific weight and/or in size. In this manner, the sensors are more likely to be evenly distributed throughout the volume of the respective component. The measurement data captured by the sensors then provide a greater certainty that all of the batch meets the respective quality criterion. This is particularly advantageous for the handling of food, where a momentary break in the cold-chain in a small volume of the batch may cause a local multiplication of bacteria that may then contaminate the entire batch.

The method may be wholly or partially computer-implemented on one or more computers, such as computers that are in use in manufacturing execution systems (MES), in product lifecycle costing systems (PLC), or in distributed control systems (DCS). The method may therefore embodied as a computer program, comprising machine-readable instructions that, when executed by one or more computers, cause the computer to perform the method. This computer program may be delivered and sold on a non-transitory machine-readable storage medium, and/or as a download product. One or more computers with said computer program, and/or with said non-transitory machine-readable storage medium or with said download product, may form turn-key solutions for introducing the method into a logistics or manufacturing process.

### Description of the Figures

In the following, the invention will be illustrated using Figures without any intention to limit the scope of the invention. The Figures show:
Figure 1: Exemplary embodiment of the sensor 4;
Figure 2: Exemplary embodiment of the method 100;
Figure 3: Exemplary scenario of yoghurt production.

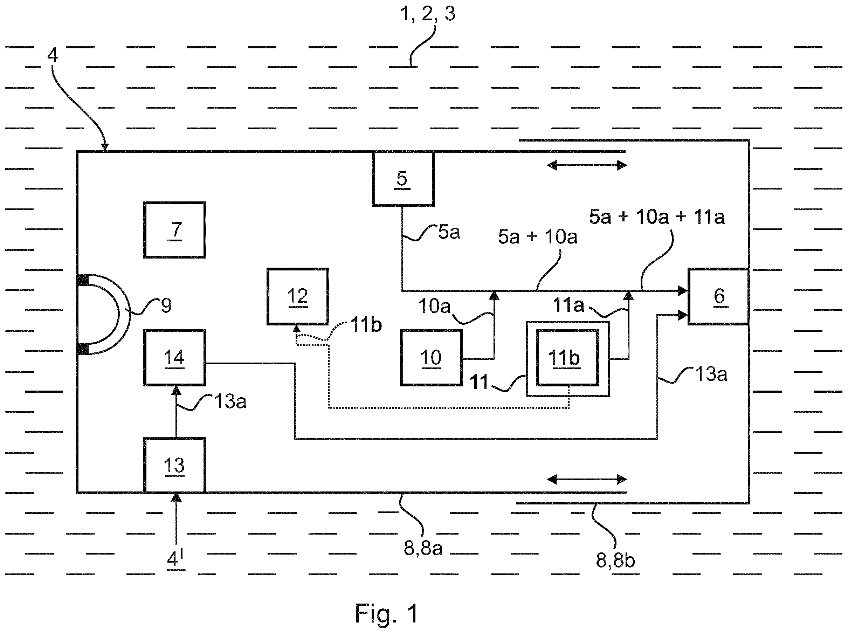

Figure 1 shows an exemplary embodiment of the sensor 4. The sensor 4 is to flow within a product 1, 2, 3. It comprises measuring means 5 that are configured to measure a physical property of the product 1, 2, 3 and output a response 5a. The response 5a is to be transmitted by transmitting means 6 to an entity who is monitoring the quality of the product 1, 2, 3. Before being transmitted, the response 5a is augmented with a timestamp 10a by timestamping means 10, and the combination of the response 5a and the timestamp 10a is digitally signed with a digital signature 11a by cryptographic means 11 using a private cryptographic key 11b.

In the example shown in Figure 1, the sensor 4 further comprises receiving means 13 that receive information 13a sent by other like sensors 4', to be stored in a memory 14 and retransmitted by the transmitting means 6. In this example, it is assumed that the information 13a has already been signed and timestamped by its source sensor 4', so it is not timestamped and signed again. If this is not the case, a time stamp 10a and digital signature 11a may be applied in the same manner as they are applied to the response 5a.

Proof of possession of the private cryptographic key 11b, be it in the form of this key 11b itself or by a challenge-response authentication, is also required to trigger the reset logic 12 with which a new monitoring session can be started from scratch.

In the example shown in Figure 1, the sensor 4 is powered by an energy harvesting device 7 that comprises a small energy storage device (not shown in detail in Figure 1), so that no battery with toxic chemicals needs to be present inside the sensor 4.

Furthermore, a ferromagnetic element 9 is present to aid the retrieving of the sensor 4 from the product 1, 2, 3 by means of a permanent or electric magnet.

All components of the sensor 4 are disposed inside a housing 8 that comprises two parts 8a and 8b. The parts 8a and 8b may be shifted relative to one another, so that the size of the sensor 4 may be increased or reduced. In this manner, the specific weight of the sensor 4 may be matched to the specific weight of the surrounding product 1, 2, 3.

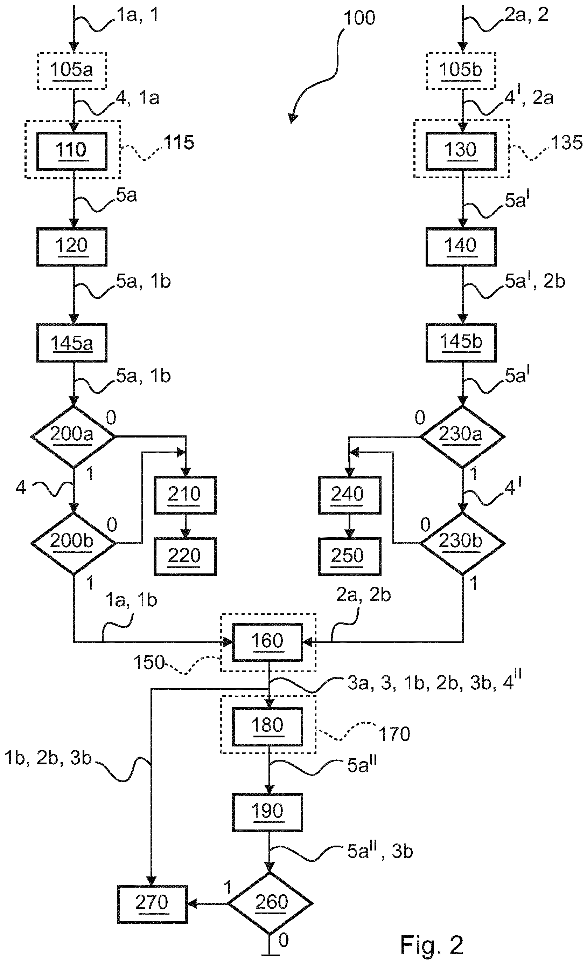

Figure 2 is a flow chart of an exemplary embodiment of the method 100. In step 105a, a plurality of first sensors 4 with varying specific weights are deployed in a first batch 1a of a first component 1 for the manufacturing of a product 3. During the handling 115 of this first batch 1a, first responses 5a that are dependent on a physical property of the first batch 1a are obtained from the first sensors 4. Because the first sensors 4 have specific weights that vary around the specific weight of the first component 1, the first sensors 4 are distributed over a fair part of the volume of the first batch 1a, so their readings 5a yield a comprehensive distribution of the examined physical property. In step 120, the first responses 5a are stored in association with a first unique identifier 1b of the first batch 1a.

Likewise, in step 105b, a plurality of second sensors 4' with varying specific weights are deployed in a second batch 2a of a second component 2 that is also to go into the manufacturing of the product 3. During the handling 135 of this second batch 2a, second responses 5a' are obtained from the second sensors 4'. In step 140, the second responses 5a' are stored in association with a second unique identifier 2b of the second batch 2a.

In step 145a, the first sensors 4 are retrieved from the first batch 1a, to be re-used on a new batch of the first component 1. It is then checked whether the first responses 5a meet a predetermined quality criterion 200a, such as a temperature that is never to exceed a predetermined threshold. If the criterion 200a is fulfilled (truth value 1), it is then checked at diamond 200b whether all the first sensors 4 have been retrieved in an intact state. If this is the case (truth value 1), the first batch 1a is released for mixing 150 with the second batch 2a. If either the quality criterion 200a is not met or not all first sensors 4 have been recovered in an intact state (truth value 0 at diamond 200a and/or 200b), the first batch 1a is marked as bad in step 210, and the mixing 150 of this first batch 1a of the first component 1 with the second batch 2a of the second component 2 is inhibited in step 220.

Likewise, in step 135b, the second sensors 4' are retrieved from the second batch 2a, to be re-used on a new batch of the second component 2. It is then checked whether the second responses 5a' meet a predetermined quality criterion 230a, which may, for example, again comprise a temperature threshold. If the criterion 230a is met (truth value 1), it is then checked at diamond 230b whether all second sensors 4' have been retrieved from the second batch 2a in an intact state. If this is the case (truth value 1), the second batch 2a is released for mixing 150 with the first batch 1a. If either the quality criterion 230a is not met or not all second sensors 4 have been recovered in an intact state (truth value 0 at diamond 230a and/or 230b), the second batch 2a is marked as bad in step 240, and the mixing 150 of the first batch 1a of the first component 1 with this second batch 2a of the second component 2 is inhibited in step 250.

If the mixing 150 of the batches 1a and 2a goes ahead, then, in step 160, a third unique identifier 3b of the resulting batch 3a of the product 3 is stored in association with the first unique identifier 1b of the first batch 1a of the first component 1 and the second unique identifier 2b of the second batch 2a of the second component 2.

During the handling 170 of this batch 3a of the product 3, a third response 5a" that is dependent on a physical property of the batch 3a of the product 3 is obtained from another sensor 4" within the batch 3a of the product 3. This third response 5a" is stored in step 190 in association with the third unique identifier 3b of the batch 3a.

If, at any time and for any reason, one of the involved batches 1a and 2a of the components 1 and 2 should be found to be bad (truth value 1 at diamond 260, such as if the disease of a milk-producing cow becomes known after the fact), then, in step 270, it is determined that the unique identifier 3b of the batch 3a of the product 3 has been stored in association with the unique identifier 1b, 2b of the bad batch 1a, 2a. This means that the bad batch 1a, 2a has been used when manufacturing the batch 3a of the product 3. Therefore, the batch 3a of the product 3 is marked as bad as well, thereby quarantining the problem.

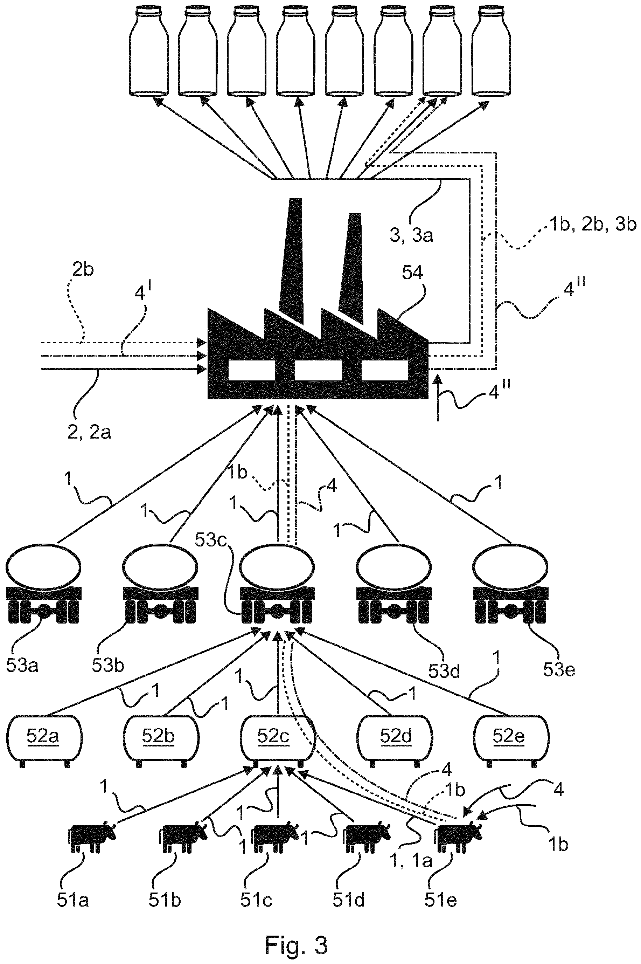

Figure 3 shows an exemplary embodiment of yoghurt production that highlights the advantages of the sensor 4 and of the method 100. In this example, five cows 51a-51e deliver milk as first component 1 to a tank 52c on a farm. A road tanker 53c collects milk 1 from this tank 52c, but also from other tanks 52a, 52b, 52d and 52e on other farms. The road tanker 53c, and more road tankers 53a, 53b, 53d and 53e, pool their contents in a tank at the factory 54. The factory 54 also takes in shredded fruit concentrate from another source as second component 2. From the milk 1 and the shredded fruit concentrate 2, yoghurt 3 is produced as final product 3.

The example shows that if one of the cows 51a-51e is sick and this is not noticed in time, or if the temperature in one of the tank trucks 53a-53e climbs too high as the result of a malfunction in the refrigeration system, the pooling of the milk 1 in the factory 54 may cause a very large amount of yoghurt 3 to be impaired in quality, thereby also wasting a very large amount of milk 1 that was not affected by the original problem (milk from healthy cows 51a-51e, respectively from properly working road tankers 53a-53e).

Therefore, to stop the problem in its tracks, a first sensor 4 is deployed into the milk 1 right when it comes from the cow 51a-51e (exemplarily shown only for cow 51e). Also, a unique batch identifier 1b is assigned to every batch 1a of milk 1 coming from every one of the cows 51a-51e (again exemplarily shown only for cow 51e). The sensor 4 will travel with the milk 1 through the tank 52c, be loaded onto the road tanker 53c, and finally reach the factory 54, so that a continuous monitoring of the milk 1 is ensured right up to the moment where it is combined with the shredded fruit concentrate 2. This shredded fruit concentrate 2 is also monitored with a second sensor 4' right up to the mixing with the milk 1. When the milk 1 is mixed with the shredded fruit concentrate 2 to form yoghurt 3, a third sensor 4" is deployed into the mixture, so that this product is further monitored as well.

The unique identifier 1b of the batch 1a stays with the milk 1 forever. No matter with how many other batches of milk 1 this batch 1a is mixed, it is therefore always known that in this mixture, milk from this particular batch 1a is present. The identifiers of these other batches have been omitted in Figure 3 for readability.

Likewise, every batch 2a of the shredded fruit concentrate 2 has its own unique identifier 2b that will stay forever with whatever mixture is produced from it. Therefore, the final batch 3a of yoghurt 3a will be associated with its own unique identifier 3b, but also with every unique identifier 2b of every batch 2a of shredded fruit concentrate that has gone into it, and also with every unique identifier 1b of every batch 1a of milk 1 that has gone into it.

As it has been discussed before in detail, this is beneficial for identifying affected downstream batches if one batch 1a of milk 1 or one batch 2a of shredded fruit concentrate 2 is later found to be bad. But it is also beneficial for identifying the root cause, e.g., a sick cow 51a-51e, in case the final batch 3a of yoghurt 3 is complained about later.

### LIST OF REFERENCE SIGNS

- 1: first component for manufacturing of product 3
- 1a: batch of first component 1
- 1b: unique identifier of batch 1a
- 2: second component for manufacturing of product 3
- 2a: batch of second component 2
- 2b: unique identifier of batch 2a
- 3: product
- 3a: batch of product 3
- 3b: unique identifier of batch 3a
- 4, 4', 4": sensors
- 5: measuring means in sensor 4
- 5a, 5a', 5a": responses obtained from sensor 4'
- 6: transmitting means in sensor 4
- 7: energy harvesting device in sensor 4'
- 8: housing of sensor 4
- 8a, 8b: parts of housing 8
- 9: ferromagnetic component of sensor 4
- 10: timestamping means of sensor 4
- 10a: timestamp
- 11: cryptographic means of sensor 4
- 11a: digital signature produced by cryptographic means 11
- 11b: private cryptographic key
- 12: reset logic of sensor 4
- 13: receiving means of sensor 4
- 13a: information received by receiving means 13
- 14: memory of sensor 4
- 51a-51e: cows
- 52a-52e: tanks on farms
- 53a-53e: road tankers
- 54: factory
- 100: method
- 105a: deploying multiple first sensors 4 in batch 1a
- 105b: deploying multiple second sensors 4' in batch 2a
- 110: obtaining first responses 5a from first sensors 4
- 115: handling of first batch 1a
- 120: storing first responses 5a associated with unique identifier 1b
- 130: obtaining second responses 5a' from second sensors 4'
- 135: handling of second batch 2a
- 140: storing second responses 5a' associated with unique identifier 2b
- 145a: retrieving first sensors 4 from first batch 1a
- 145b: retrieving second sensors 4' from second batch 2a
- 150: mixing of first batch 1a with second batch 1b
- 160: storing third unique identifier 3b associated with identifiers 1b, 2b
- 170: handling of batch 3a of product 3
- 180: obtaining third response 5a" from sensor 4, 4', 4"
- 190: storing third response 5a" associated with unique identifier 3b
- 200a: checking quality criterion for first responses 5a
- 200b: checking retrieval of first sensors 4 from first batch 1a
- 210: marking first batch 1a as bad
- 220: inhibiting mixing 150
- 230a: checking quality criterion for second responses 5a'
- 230b: checking retrieval of second sensors 4' from second batch 2a
- 240: marking second batch 2a as bad
- 250: inhibiting mixing 150
- 260: determining batch 1a, 2a as bad
- 270: marking all affected batches 3a as bad

## Claims

1. A sensor (4) for monitoring the quality of a pourable and/or pumpable product (1-3), comprising:
• measuring means (5) configured to physically interact with at least one physical property of the product (1-3) and to output a response (5a) that is dependent on this physical property, and/or on the history of this physical property; and
• transmitting means (6) configured to convey said response (5a) to an entity who is monitoring the quality of the product (1-3),
wherein the sensor (4) is pourable and/or pumpable together with the product (1-3) and
• has a specific weight that is sufficiently similar to the specific weight of the product (1-3) such that the sensor (4) is able to float within the product (1-3); and/or
• comprises means (8, 8a, 8b) for adjusting its specific weight.

2. The sensor (4) of claim 1, wherein the sensor (4) has a specific weight between 0.8 times and 1.2 times the specific weight of the product (1-3).

3. The sensor (4) of any one of claims 1 to 2, wherein the measuring means comprise at least one element with an electrical and/or magnetic property that changes with said physical property of the product (1-3), and/or at least one element that changes from a first stable physical state to a second stable physical state in response to said physical property meeting or exceeding a predetermined threshold.

4. The sensor (4) of any one of claims 1 to 3, wherein the transmitting means (6) are configured to change their optical appearance when the response (5a) changes.

5. The sensor (4) of any one of claims 1 to 4, wherein the transmitting means (6) comprise a radio frequency transmitter and/or an RFID transponder.

6. The sensor (4) of any one of claims 1 to 5, further comprising an energy harvesting device (7) that is configured to convert a motion and/or an acceleration of the sensor (4) into electrical power.

7. The sensor (4) of any one of claims 1 to 6, wherein the sensor (4) is configured to be pourable and/or pumpable together with a product (1-3) that has the form of solid grains, and wherein a size of the sensor (4) is between 0.8 times and 1.2 times the average size of said grains.

8. The sensor (4) of any one of claims 1 to 7, further comprising a housing (8, 8a, 8b) that is expandable and/or contractable in order to change the specific weight, and/or the size, of the sensor (4).

9. The sensor (4) of any one of claims 1 to 8, further comprising a ferromagnetic element (9) that is configured to stick to a magnet with a greater force than the force corresponding to the weight of the sensor (4).

10. The sensor (4) of any one of claims 1 to 9, further comprising timestamping means (10) configured to associate a timestamp (10a) with the response (5a).

11. The sensor (4) of any one of claims 1 to 10, further comprising cryptographic means (11) configured to apply a digital signature (11a) to the response (5a), and/or to the timestamp (10a), by means of a private cryptographic key (11b), and/or to encrypt the response (5a), and/or the timestamp (10a).

12. The sensor (4) of claim 11, further comprising reset logic (12) configured to reset, after completion of a monitoring session, the sensor (4) to begin a new monitoring session, wherein this reset logic (12) is further configured to require proof of possession of said private cryptographic key (11b) before performing the reset.

13. The sensor (4) of any one of claims 1 to 12, further comprising: means (13) to receive, from at least one other sensor (4'), information (13a) gathered during a monitoring session performed by said other sensor (4') on the product (3) or one or more of its educts (1-2), and a memory (14) configured to store at least this information (13a).

14. The sensor (4) of any one of claims 1 to 13, wherein the sensor (4) comprises a unique identifier, and the transmitting means (6) are further configured to convey said unique identifier to the entity who is monitoring the quality of the product (1-3).

15. The sensor (4) of any one of claims 1 to 14, wherein the measuring means (5) are configured to output a response (5a) that is dependent on the temperature, the concentration of a chemical substance or microorganism, a motion and/or acceleration, and/or on a history of one or more of these quantities.

16. A system for monitoring a product (1-3), comprising a plurality of sensors (4) according to any one of claims 1 to 15, and further comprising and an administration entity that is configured to collect responses (5a) transmitted by the sensors (4) through their respective transmitting means (6).

17. A method (100) for monitoring the quality of a pourable and/or pumpable product by means of a plurality of sensors (4, 4'), comprising:
• obtaining (110), during the handling (115) of a first batch (1a) of a first component (1) of the product (3), from at least one first sensor (4) within the first batch (1a) of the first component (1), a first response (5a) that is dependent on at least one physical property of the first batch (1a) of the first component (1);
• storing (120) the first response (5a) in association with a first unique identifier (1b) of the first batch (1a) of the first component (1);
• obtaining (130), during the handling (135) of a second batch (2a) of a second component (2) of the product (3), from at least one second sensor (4') within the second batch (2a) of the second component (2), a second response (5a') that is dependent on at least one physical property of the second batch (2a) of the second component (2);
• storing (140) the second response (5a') in association with a second unique identifier (2b) of the second batch (2a) of the second component (2);
• upon mixing (150) the first batch (1a) of the first component (1) with the second batch (2a) of the second component (2), storing (160) a third unique identifier (3b) of the resulting batch (3a) of the product (3) in association with the first unique identifier (1b) of the first batch (1a) of the first component (1) and the second unique identifier (2b) of the second batch (2a) of the second component (2).

18. The method (100) of claim 17, further comprising:
• obtaining (180), during the handling (170) of the batch (3a) of the product (3), from at least one sensor (4, 4', 4") within the batch (3a) of the product (3), a third response (5a") that is dependent on at least one physical property of the batch (3a) of the product (3); and
• storing (190) the third response (5a") in association with the third unique identifier (3b) of the batch (3a) of the product (3).

19. The method (100) of any one of claims 17 to 18, further comprising: before mixing (150) the first batch (1a) of the first component (1) with the second batch (2a) of the second component (2), retrieving (145a) the first sensor (4) from the first batch (1a) of the first component (1), and retrieving (145b) the second sensor (4') from the second batch (2a) of the second component (2).

20. The method (100) of any one of claims 17 to 19, further comprising:
• if the first response (5a) fails to meet a first predefined quality criterion (200a), and/or if not all first sensors (4) are retrieved from the first batch (1a) of the first component (1) in an intact state (200b), marking (210) the first batch (1a) of the first component (1) as bad, and inhibiting (220) the mixing (150) of the first batch of the first component with the second batch of the second component; and
• if the second response (5a') fails to meet a second predefined quality criterion (230a), and/or if not all second sensors (4') are retrieved from the second batch (2a) of the second component (2) in an intact state (230b), marking (240) the second batch (2a) of the second component (2) as bad, and inhibiting (250) the mixing (150) of the first batch (1a) of the first component (1) with the second batch (2a) of the second component (2).

21. The method (100) of any one of claims 17 to 19, further comprising: in response to determining (260) that a batch (1a, 2a) of a component (1, 2) is bad, marking (270) as bad all further batches (3a) whose unique identifiers (3b) are stored in association with the unique identifier (1b, 2b) of the batch (1a, 2a) determined as bad.

22. The method (100) of any one of claims 17 to 21, wherein the storing (120, 140, 190) is performed on a write-once, read-many memory, and/or on a blockchain.

23. The method (100) of any one of claims 17 to 22, wherein at least one sensor (4, 4', 4") is chosen to be a sensor (4) according to any one of claims 1 to 15.

24. The method (100) of claim 23, wherein
• a plurality of first sensors (4) is deployed (105a) in the first batch (1a) of the first component (1), and these first sensors (4) differ in specific weight and/or in size; and/or
• a plurality of second sensors (4') is deployed (105b) in the second batch (2a) of the second component (2), and these second sensors (4') differ in specific weight and/or in size.

25. The method (100) of any one of claims 17 to 24, wherein at least one sensor (4, 4', 4") is chosen to be a sensor that is fixed on the inside of a packaging in which the product (3) is delivered.

26. A computer program, comprising machine-readable instructions that, when executed by one or more computers, cause the computer to perform the method (100) of any one of claims 17 to 25.

27. A non-transitory machine-readable storage medium, and/or a download product, with the computer program of claim 26.

28. One or more computers with the computer program of claim 26, and/or with the non-transitory machine-readable storage medium and/or download product of claim 27.
